# EUROPEAN PATENT APPLICATION

(11) **EP 4 653 709 A1**
(43) Date of publication of application: **26.11.2025**
(21) Application number: 25177252.1
(22) Date of filing: 19.05.2025
(51) Int. Cl.: F15B 11/16, B62D 5/07, F15B 13/02

(54) **VALVE DEVICE**

(30) Priority: 21.05.2024 IT 202400011431
(71) Applicant: SAFIM S.r.l., 41123 Modena (MO) (IT)
(72) Inventor: PARMEGGIANI, Matteo, 41123 Modena (MO) (IT)
(74) Representative: Zoli, Filippo

(57) **Abstract**

The valve device (1) comprises:
- at least one supply line (2) connectable to a source of a working fluid under pressure;
- at least one delivery line (3) connectable to a user point;
- valve means (4) positioned between the supply line (2) and the at least one delivery line (3) and movable between a home position and at least one working position;
- piloting means (5) of the valve means (4) comprising at least a first piloting line (6) operating on the valve means (4) to push them from the home position to the working position, a second piloting line (7) operating on the opposite side of the first piloting line (6) and elastic means (8) operating on the valve means (4) from the same the of said second piloting line (7);
wherein the piloting means (5) comprise a piloting device (18) provided with a control line (19) connectable to an auxiliary source of a working fluid under pressure and operating on the valve means (4), depending on the pressure of the working fluid along the control line (19) by varying the overall force exerted by the piloting means (5) on the valve means (4).

## Description

### Technical Field

This invention relates to a valve device, particularly for pressure compensation in fluid-operated circuits.

### Background Art

As is widely known, valve devices are used in fluid-operated circuits in order to isolate/set lines in communication having with different pressures.

Thus, the fluid-operated circuits of known type comprise a pumping assembly adapted to deliver a working fluid under pressure (usually oil), a supply line communicating with such pumping assembly and adapted to convey the fluid under pressure to the various user points, one or more delivery lines connectable to the user points to be supplied with the working fluid and valve devices placed between the supply line and the delivery lines.

Such valve devices comprise valve means movable between a home position and at least one working position, depending on which connections between the supply line and the delivery lines are changed, and piloting means of such valve means adapted to control the displacement thereof between the various positions. The piloting means comprise, e.g., a first piloting line, a second piloting line operating on the valve means on the opposite side of the first piloting line and elastic means operating on the valve means from the same side of the first piloting line.

More particularly, the valve means move from the home position to a working position when the force exerted by the pressure along the first piloting line is greater than the sum of the force exerted by the pressure along the second piloting line and that exerted by the elastic means.

A particular example is the so-called "priority valves", which are valves used to manage the connection between a source of a working fluid under pressure (e.g., oil) and a plurality of user points having different "priorities". In particular, the user points having higher priority need to be supplied first than those having lower priority.

For example, the user point having main priority is generally the steering device, which allows steering the operating machine in the desired directions, the user point having secondary priority (lower, therefore, than the main one), on the other hand, is generally the so-called "trailer-brake valve" which is adapted to transfer the braking action of the tractor to the braking system of the trailer in such a way that the respective braking actions are connected to each other, and the user point having third priority (lower therefore than the previous ones) is, e.g., the hydraulic distributor to which functions are connected which are related to the work of the machine, not related to safety.

Additional user points, having gradually decreasing priority (meaning that the level of importance of the user point is gradually lower), may be the various auxiliary services with which the tractor is provided, such as e.g. the implements with which it is provided.

A fluid-operated circuit for supplying the primary and auxiliary user points with predefined priorities is e.g. known from WO 2004/046561 A1.

The valve devices of known type do however have some drawbacks. Specifically, the preload of the elastic means defines the pressure difference between the first piloting line and the second piloting line to cause the displacement of the valve means.

In addition, in the case of a variable-displacement pumping assembly (i.e., provided with a displacement regulating device operationally connected to the second piloting line to regulate the pump displacement so that the pressure of the fluid delivered is greater than the pressure along the second piloting line itself by a predefined value V_{P}, so-called "pump margin"), the preload of the elastic means must be lower than the pump margin in order to avoid unwanted displacement to the home position and, therefore, the occurrence of unwanted closure of the connection with one or more delivery lines.

In the case, on the other hand, of a constant-displacement pumping assembly, the presence of the elastic means requires a continuous loss of energy, which is necessary to overcome the preload exerted by the elastic means themselves, in order to keep the connection open with the relevant delivery line.

### Description of the Invention

The main aim of the present invention is to devise a valve device which allows the drawbacks of the prior solutions described above to be overcome.

In particular, within this aim, one object of the present invention is to enable the pressure difference between the first piloting line and the second piloting line, which is necessary to cause the displacement of the valve means, to be released from the calibration of the elastic means alone, so that this pressure difference can be adapted to the specific operating conditions.

Another object is to allow using variable-displacement and variable pump margin pump assemblies.

An additional object of the present invention is to minimize energy losses to set the supply line in communication with the delivery lines in the case of a constant-displacement pumping assembly.

Another object of the present invention is to devise a valve device which allows the aforementioned drawbacks of the prior art to be overcome within the framework of a simple, rational, easy and efficient to use as well as cost-effective solution.

The aforementioned objects are achieved by this valve device according to claim 1.

### Brief Description of the Drawings

Other characteristics and advantages of the present invention will become more apparent from the description of a preferred, but not exclusive, embodiment of a valve device, illustrated by way of an indicative, yet non-limiting example in the attached tables of drawings in which:
Figure 1 is the hydraulic diagram of a valve device according to the invention, in a first embodiment;
Figure 2 is the hydraulic diagram of a valve device according to the invention, in a second embodiment;
Figure 3 is the hydraulic diagram of a fluid-operated circuit comprising two valve devices made in accordance with the first embodiment;
Figure 4 is the hydraulic diagram of a fluid-operated circuit comprising two valve devices made in accordance with the second embodiment;
Figure 5 is the hydraulic diagram of a valve device according to the invention, in a third embodiment;
Figure 6 is the hydraulic diagram of a fluid-operated circuit comprising two valve devices made in accordance with the third embodiment;
Figure 7 is a cross-section of a valve device made in accordance with the first embodiment;
Figure 8 is a cross-section of a valve device made in accordance with the second embodiment;
Figure 9 is a cross-section of a valve device made in accordance with the third embodiment.

### Embodiments of the Invention

With particular reference to these figures, reference numeral 1 globally denotes a valve device, particularly for pressure compensation in a fluid-operated circuit.

The device 1 comprises at least one supply line 2 connectable to a source of a working fluid under pressure, such as e.g. a pumping assembly 33, at least one delivery line 3 connectable to a user point, valve means 4 positioned between the supply line 2 and the at least one delivery line 3 and movable between a home position and at least one working position.

More particularly, the delivery line 3 can be connected, e.g., to the steering unit of a vehicle.

In one particular embodiment, the device 1 may comprise a plurality of delivery lines 3 connectable to user points having predefined priorities such as, e.g., the brake valve of a trailer and a hydraulic distributor.

Then, the device 1 comprises piloting means 5 of the valve means 4 comprising at least a first piloting line 6 operating on the valve means 4 to push them from the home position to a working position, a second piloting line 7 operating on the opposite side of the first piloting line 6 and elastic means 8 operating on the valve means 4 from the same side of the second piloting line 7.

The home position corresponds, therefore, to an end-of-stroke position of the valve means 4, which are displaced towards a working position when the force exerted by the first piloting line 6 turns out to be greater than the sum of the forces operating on the opposite side.

In more detail, the valve means 4 comprise at least one hollow body 9 defining a housing seat 10 which is provided with at least one supply port 11 communicating with the supply line 2, with at least one delivery port 12 communicating with the delivery line 3, with at least one first port 13 communicating with the first piloting line 6 and with at least one second port 14 communicating with the second piloting line 7. Then, within the housing seat 10 is housed in a sliding manner at least one distributor element 15, which is movable to set in communication/isolate the supply port 11 with/from the at least one delivery port 12.

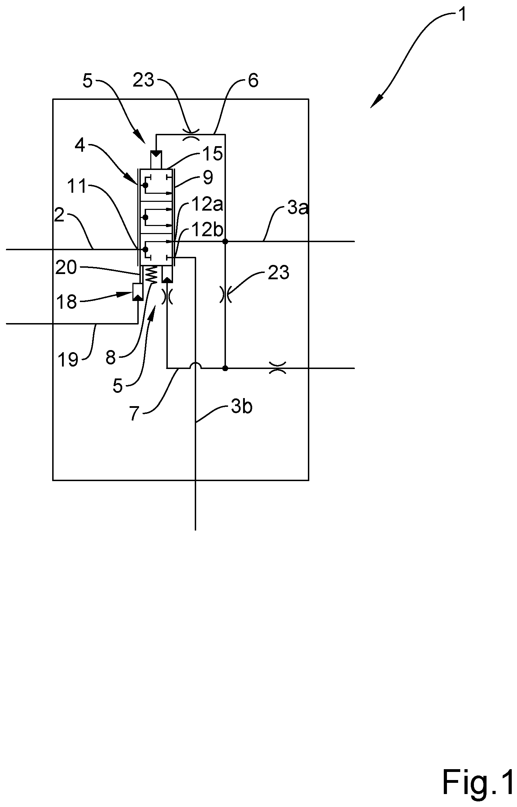

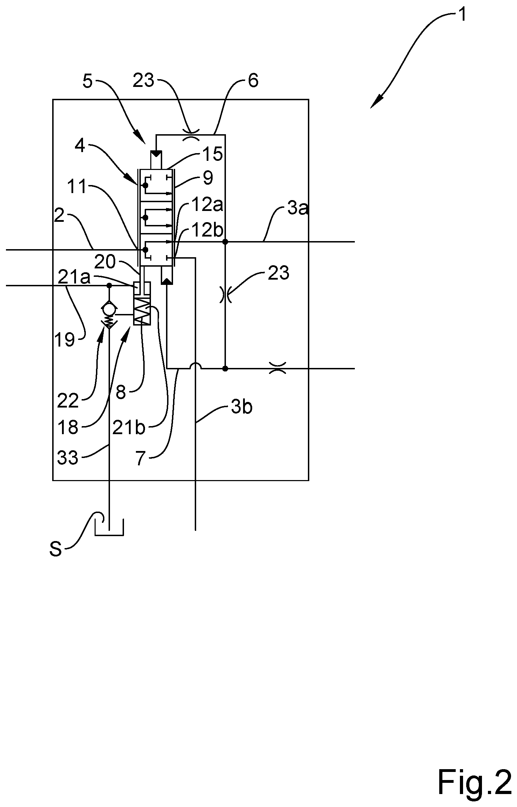

In the event of the device 1 being provided with a plurality of delivery lines 3 (as in the embodiments in Figures 1 and 2), such as a first delivery line 3a and a second delivery line 3b, the body 9 has a corresponding number of delivery ports 12, such as a first delivery port 12a and a second delivery port 12b.

Between the body 9 and the distributor element 15 is defined at least a first chamber 16 communicating with the first port 13 and at least a second chamber 17 arranged on the opposite side of the first chamber 16 and communicating with the second port 14. The elastic means 8 operate on the distributor element 15 on the opposite side of the first chamber 16 to counteract the action exerted on the distributor element itself by the first piloting line 6.

According to the invention, the piloting means 5 comprise a piloting device 18 provided with a control line 19 connectable to an auxiliary source of a working fluid under pressure and operating on the valve means 4 from the same side as the second piloting line 7, depending on the pressure of the working fluid along the control line 19 by varying the overall force exerted by the piloting means 5 on the valve means 4 counteracting the first piloting line 6.

More particularly, the piloting device 18 comprises at least one actuator element 20 operationally connected to the valve means 4 and communicating with the control line 19.

Advantageously, the piloting device 18 defines a piloting chamber 21, arranged on the side of the second chamber 17 with respect to the distributor element 15, communicating with the control line 19 and within which the actuator element 20 is at least partly housed. More in detail, the piloting chamber 21 is bounded by the body 9 and, depending on the embodiment, either by the actuator element 20 or by the distributor element 15.

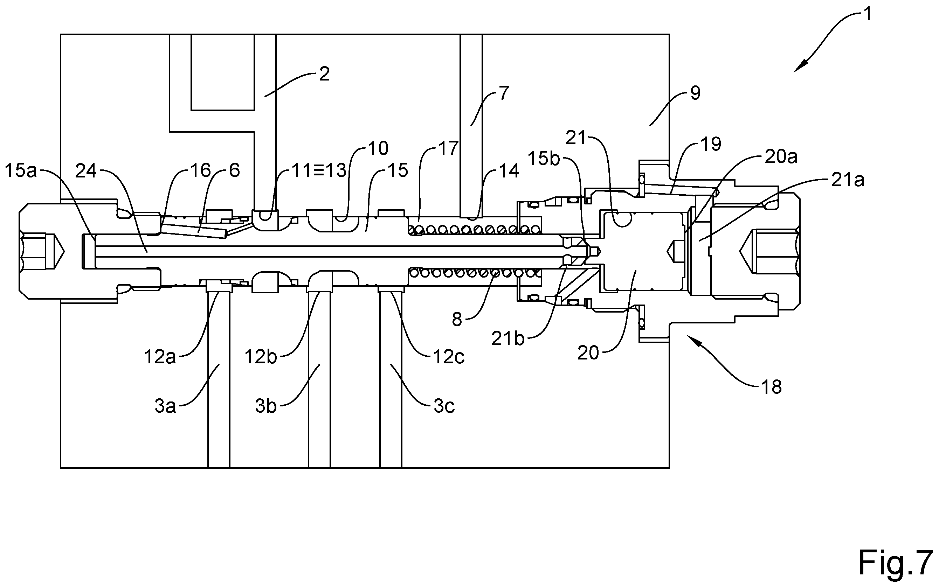

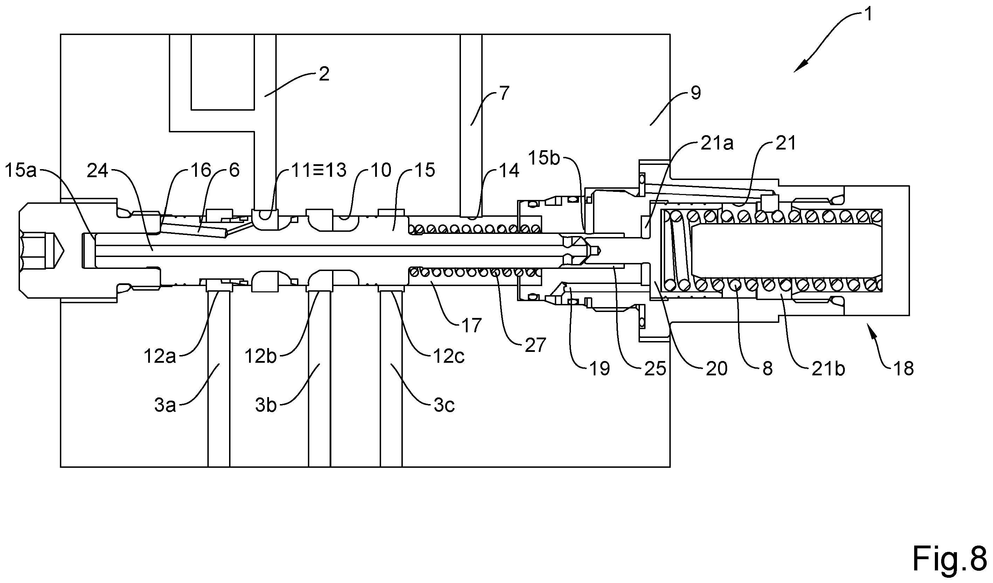

In the embodiment in Figure 7, the actuator element 20 is completely contained within the piloting chamber 21, while in the embodiment in Figure 8, the actuator element 20 has a portion contained within the piloting chamber 21 and a portion that protrudes within the second chamber 17 and is kinematically connected to the distributor element 15.

Therefore, the displacement of the actuator element 20 due to the pressure of the working fluid along the control line 19 (and thus within the piloting chamber 21 causes the consequent movement of the distributor element 15 in a way concordant or contrary to the thrust exerted by the elastic means 8 on the distributor element itself.

In more detail, the actuator element 20 splits the piloting chamber 21 into a thrust chamber 21a, communicating with the control line 19, and into a discharge chamber 21b, communicating with a discharge tank. The thrust chamber 21a and the discharge chamber 21b are arranged on opposite sides with respect to the actuator element 20.

More particularly, the actuator element 20 has a usable area 20a bounding the thrust chamber 21a and which corresponds to the area resulting from the difference of the areas over which the working fluid coming from the control line 19 operates and which corresponds to the circular area of the actuator element 20 facing the discharge chamber 21b.

In a first embodiment, shown in Figures 1, 3 and 7, as the pressure of the working fluid along the control line 19 increases, the force exerted by the actuator element 20 on the distributor element 15 counteracting the action of said first piloting line 6 increases.

In this embodiment, the discharge chamber 21b faces the valve means 4 and, more particularly, is placed between the thrust chamber 21a and the second chamber 17. In this embodiment, the elastic means 8 are housed within the second chamber 17 and are placed between the body 9 and the distributor element 15 and operate directly on the latter. Thus, the thrust exerted by the actuator element 20 on the distributor element 15 as a result of the increase in pressure of the working fluid along the control line 19 results in the exertion of a force on the distributor element itself directed in a way concordant with the thrust exerted thereon by the elastic means 8.

In a second embodiment, shown in Figures 2, 4 and 8, as the pressure of the working fluid along the control line 19 increases, on the other hand, the force exerted by the actuator element 20 on the distributor element 15 counteracting the action of the first piloting line 6 progressively decreases. In other words, the force exerted by the working fluid coming from the control line 19 on the actuator element 20 operates in a way concordant with the action of the first piloting line 6 on the distributor element 15.

In this second embodiment, the thrust chamber 21a faces the side of the valve means 4 and is placed between the second chamber 17 and the discharge chamber 21b. The elastic means 8 are housed within the discharge chamber 21b. Due to the increase in pressure of the working fluid along the control line 19, the component of the force exerted on the actuator element 20 increases in a way concordant with the action exerted by the first piloting line 6. The compression of the elastic means 8 thus turns out to be a function of the position of the distributor element 15 and the resultant force operating on the latter is a function of the action exerted by the actuator element 20 and by the elastic means 8. Therefore, the resultant force on the distributor element 15 turns out to be maximum in the absence of pressure along the control line 19 and equal to that exerted by the elastic means 8.

Advantageously, in the second embodiment described above, the valve device 1 also comprises safety valve means 22 adapted to set the control line 19 in communication with the discharge chamber 21b upon reaching a predefined pressure value along the control line itself. The safety valve means 22 may be of the type of a sequence valve (shown in the figures) or, alternatively, it may comprise one or more drawer valves. In this way, when the pressure along the control line 19 exceeds the predefined value, the safety valve means 22 are activated thus allowing the working fluid flowing through the control line 19 to also flow into the discharge chamber 21b, thus counteracting the pressure in the thrust chamber 21a.

In the embodiment shown in the section of Figure 8, within the second chamber 17 are housed additional elastic means 27, which are placed between the distributor element 15 and the body 9. These additional elastic means 27, which are alternative to the safety valve means 22, allow avoiding the risk of the pressure dropping to zero if the piloting pressure along the control line 19 increases too much.

Preferably, the end portions of the distributor element 15 communicate with the discharge chamber 21b.

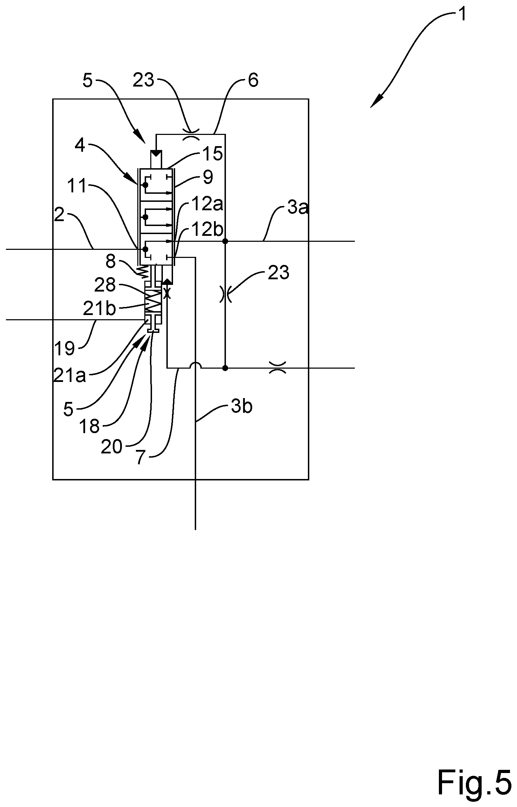

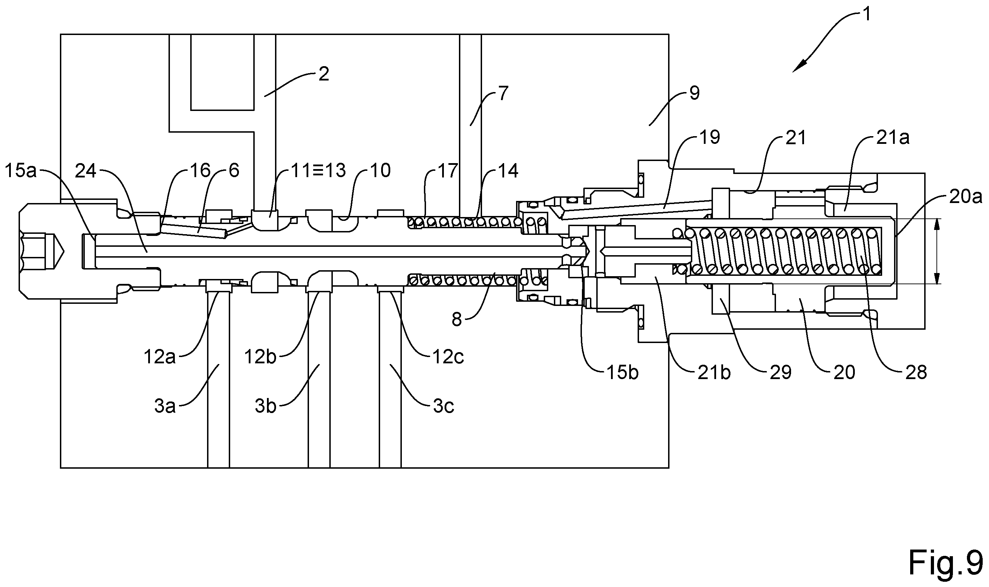

In a third embodiment, shown in Figures 5, 6 and 9, as the pressure of the working fluid along the control line 19 increases, the force exerted by the actuator element 20 on the distributor element 15 counteracting the action of said first piloting line 6 increases to a predefined threshold value.

In this embodiment, the discharge chamber 21b faces the valve means 4 and, more particularly, is placed between the thrust chamber 21a and the second chamber 17. More particularly, the elastic means 8 are housed within the second chamber 17 and are placed between the body 9 and the distributor element 15 and operate directly on the latter (as in the first embodiment), and the piloting device 18 comprises elastic piloting means 28 placed between the actuator element 20 and the distributor element 15. The elastic piloting means 28 are housed within the discharge chamber 21b. As the pressure of the working fluid in the thrust chamber 21a increases, the actuator element 20, as a result of the thrust exerted by the working fluid on its usable area 20a, progressively compresses the elastic piloting means 28, which in turn exert a force of increasing intensity on the distributor element 15 directed in a way concordant with the thrust exerted thereon by the elastic means 8. Appropriately, the body 9 defines an abutment surface 29 adapted to interact with the actuator element 20 during the displacement thereof as it moves close to the distributor element 15. The abutment surface 29 therefore defines a first end-of-stroke position of the actuator element 20, so that once this first end-of-stroke position is reached as the pressure of the working fluid in the thrust chamber 21a increases, the actuator element 20 does not further compress the elastic piloting means 28 and, consequently, the force operating on the distributor element 15 does not change any further. Thus, the first end-of-stroke position defines the predefined threshold value of the force exertable by the actuator element 20 on the distributor element 15. Preferably, when the pressure of the working fluid along the control line 19 is substantially equal to zero, the actuator element 20 is free to move by a predefined length of stroke without interacting with the elastic piloting means 28. More specifically, when the pressure along the control line 19 is substantially equal to zero, the actuator element 20 is in a second end-of-stroke position, wherein the elastic piloting means 28 are stretched, and the actuator element moves by the effect of only the resultant of the forces due to the pressure of the working fluid in the first chamber 16 and in the second chamber 17.

As can be seen from Figures 7, 8, and 9, which represent sections of a valve device 1 made in accordance with the first, second, and third embodiments, respectively, the distributor element 15 comprises a through hole 24 adapted to set its opposite ends 15a and 15b in communication with each other, of which a first end 15a and a second end 15b. The through hole 24 runs longitudinally on the distributor element 15. Appropriately, the end 15b of the distributor element 15 interacting with the actuator element 20 is set in communication with the discharge chamber 21b. This expedient allows the active areas on the two sides of the distributor element 15 to be balanced.

In more detail, in the section of Figure 8, relating to the second embodiment, between the second chamber 17 and the thrust chamber 21a is placed a connecting chamber 25 communicating with the discharge chamber 21b and within which the second end 15b is housed in a sliding manner.

In a particular embodiment, not shown in the figures, the control line 19 is communicating with the supply line 2.

Figures 1, 2, and 5 show two devices 1, made in accordance with the first, second and third embodiments described above, respectively, provided with two delivery lines 3, of which a first delivery line 3a and a second delivery line 3b, and the valve means 4 are movable between the home position, wherein they set the supply line 2 in communication with only the first delivery line 3a (having higher priority), a first working position following the home position and wherein they set the supply line 2 in communication with both delivery lines 3a and 3b, and a second working position following the first working position and wherein they set the supply line 2 in communication with only the second delivery line 3b.

Preferably, in the valve devices 1 of Figures 1, 2 and 5, the first piloting line 6 and the second piloting line 7 are communicating with the same delivery line 3, the first delivery line 3a in this case, and there is at least one bottleneck 23 communicating with the first piloting line 6.

Appropriately, the device 1 shown in Figure 2 also comprises a discharge line 33 communicating with a discharge tank S.

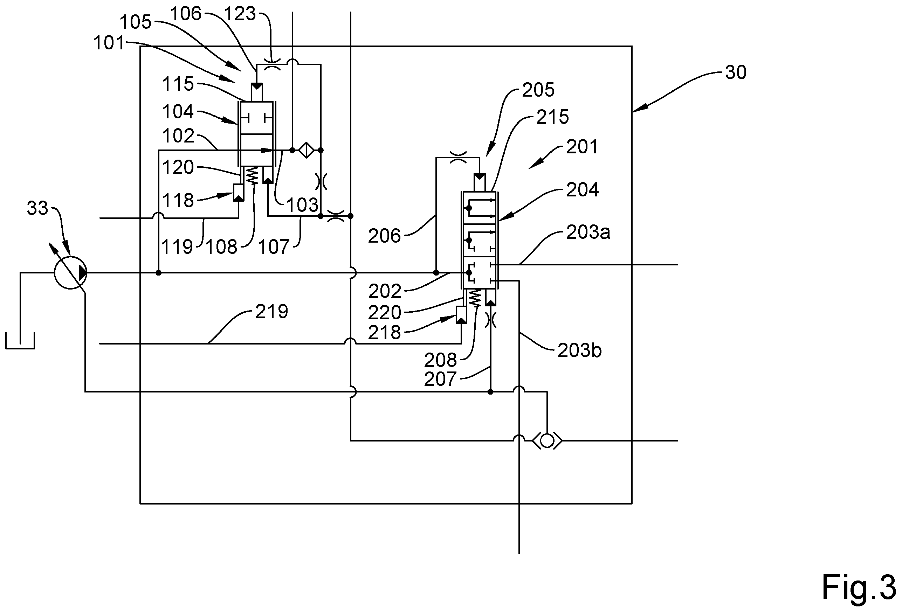

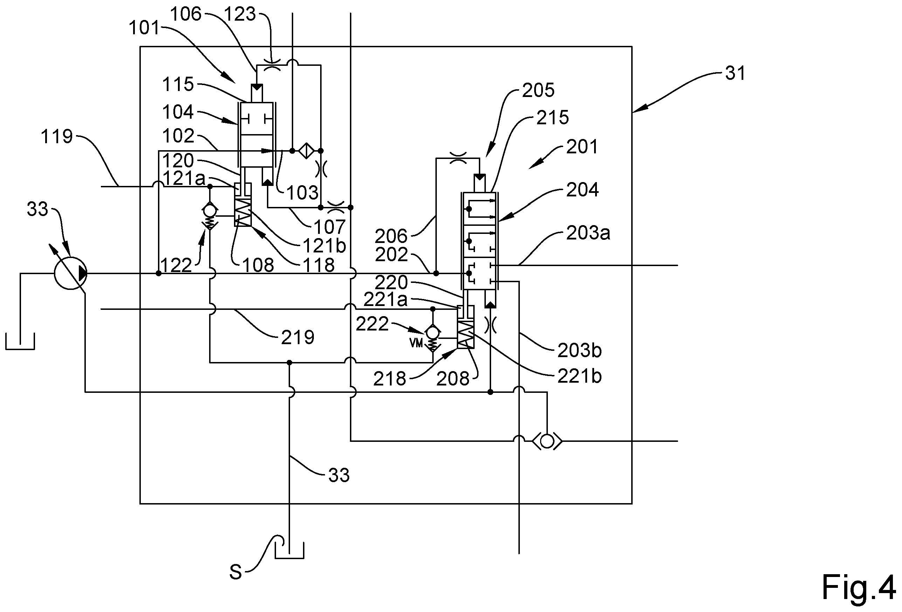

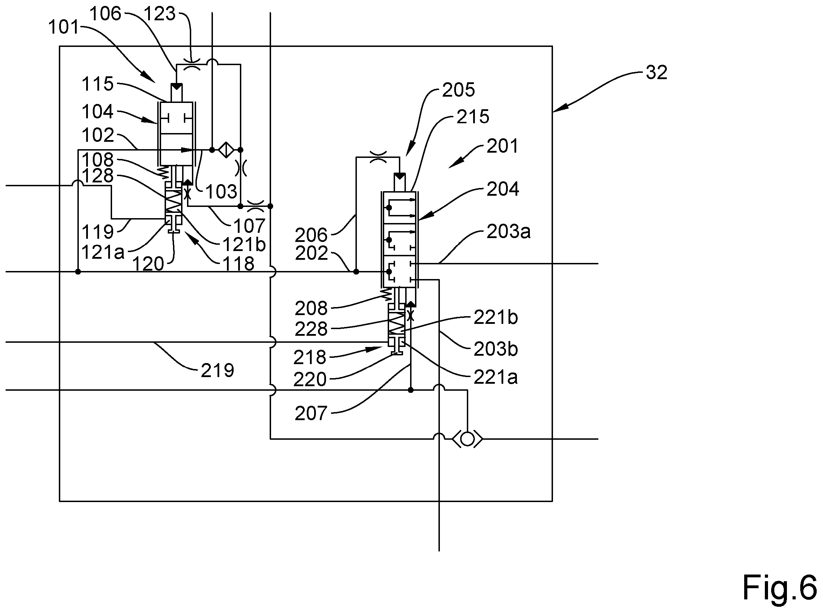

Figures 3, 4 and 6, on the other hand, represent two circuits 30, 31 and 32 each comprising two valve devices 1, of which a first valve device 101 and a second valve device 201, where the valve devices 101,201 contained in the circuit 30 of Figure 3 are made in accordance with the first embodiment described above, the valve devices 101,201 contained in circuit 31 of Figure 4 being made in accordance with the second embodiment described above and the valve devices 101,201 contained in the circuit 32 of Figure 6 are made in accordance with the third embodiment. In other words, in the valve devices 101, 201 of the circuit 30, the pressure of the working fluid along the control line 19 exerts on the actuator element 20, and thus on the distributor element 15, a force directed in a way concordant with that exerted by the elastic means 8, in the valve devices 101, 201 of the circuit 31 the pressure of the working fluid along the control line 19 exerts on the actuator element 20, and thus on the distributor element 15, a force directed in the opposite way to that exerted by the elastic means 8 and in the valve devices 101, 201 of the circuit 32, the pressure of the working fluid along the control line 19 exerts on the actuator element 20, and thus on the distributor element 15, a force directed in a way concordant to that exerted by the elastic means 8 up to a predefined threshold value from the first end-of-stroke position of the actuator element itself.

The same components of each valve device 101,201 are identified with the same reference numeral as described above but to which the number 100 is added when referring to the first valve device 101 and the number 200 is added when referring to the second valve device 201. For example, the first piloting line 6 is identified with the number 106 when referring to the first valve device 101 and with the reference number 206 when referring to the second valve device 201, just as the piloting device 18 is identified with the number 118 when referring to the first valve device 101 and with the reference number 218 when referring to the second valve device 201.

More particularly, in the first valve device 101 the valve means 104 in the home position set the supply line 102 in communication with the delivery line 103 and in the working position they interrupt the connection between the supply line 102 and the delivery line 103. In the first valve device 101 the first piloting line 106 and the second piloting line 107 are both communicating with the delivery line 103. Appropriately, at least one bottleneck 123 may be arranged along the first piloting line 106 to function as a damper.

The second valve device 201 comprises, on the other hand, a plurality of delivery lines 203, of which a first delivery line 203a and a second delivery line 203b, connectable to relevant user points having predefined priorities. The valve means 204 have a plurality of working positions, equal to the number of delivery lines 203a, 203b where, upon reaching each working position, they set the supply line 202 in communication with a corresponding delivery line 203a,203b while keeping open the connection between the supply line 202 and the delivery line 203a,203b corresponding to the previous working position. The working positions are arranged in succession to each other so as to progressively set the supply line 202 in communication with the delivery lines 203a and 203b having gradually decreasing priority as you move away from the home position. In the valve device 201 contained in the circuits 30 and 31, the first piloting line 206 is communicating with the supply line 202 and the second piloting line 207 is communicating with the delivery line having higher pressure, of either the first delivery line 203a or the delivery line 103 of the valve device 101.

Thus, the circuits 30 and 31 correspond to fluid-operated circuits for supplying primary and auxiliary user points with predefined priorities, where the supply lines 102 and 202 are communicating with each other and connectable to the same pumping assembly, where the delivery line 103 is adapted to supply a user point having primary priority and where the first delivery line 203a and the second delivery line 203b are adapted to supply the user points having second priority and third priority, respectively.

It has in practice been ascertained that the described invention achieves the intended objects, and in particular, the fact is emphasized that the valve device covered by this invention enables, as a result of the action of the working fluid under pressure passing through the control line, the intensity of the force exerted on the valve means to be varied, so as to release it from the action of the elastic means alone.

In this way, pumping assemblies with variable pump margin can be used because the force exerted on the valve means on the opposite side of the first piloting line can be adapted to the specific operating conditions, and energy losses can be reduced in the case of fixed displacement pumping assemblies.

Again, depending on the way the control line is connected to the thrust chamber, it is possible to make the action of the working fluid flowing through the control line operate in a way concordant or opposite to the action of the elastic means.

## Claims

1. Valve device (1) comprising:
- at least one supply line (2) connectable to a source of a working fluid under pressure;
- at least one delivery line (3) connectable to a user point;
- valve means (4) positioned between said supply line (2) and said at least one delivery line (3) and movable between a home position and at least one working position;
- piloting means (5) of said valve means (4) comprising at least a first piloting line (6) operating on said valve means (4) to push them from the home position to the working position, a second piloting line (7) operating on the opposite side of said first piloting line (6) and elastic means (8) operating on said valve means (4) from the same side of said second piloting line (7);
**characterized by** the fact that
said piloting means (5) comprise a piloting device (18) provided with a control line (19) connectable to an auxiliary source of a working fluid under pressure and operating on said valve means (4), depending on the pressure of the working fluid along said control line (19) by varying the overall force exerted by said piloting means (5) on said valve means (4).

2. Device (1) according to claim **1, characterized by** the fact that said control line (19) operates on said valve means (4) from the same side as said second piloting line (7).

3. Device (1) according to claim 1 or 2, **characterized by** the fact that said piloting device (18) comprises at least one actuator element (20) operationally connected to said valve means (4) and communicating with said control line (19).

4. Device (1) according to claim 3, **characterized by** the fact that said valve means (4) comprise at least one hollow body (9) defining a housing seat (10) which is provided with at least one supply port **(11)** communicating with said supply line (2), with at least one delivery port (12) communicating with said delivery line (3), with at least one first port (13) communicating with said first piloting line (6), with at least one second port (14) communicating with said second piloting line (7) and comprising at least one distributor element (15) housed within said housing seat (10) in a sliding manner and movable to set in communication/isolate said supply port **(11)** with/from said at least one delivery port (12), wherein between said body and said distributor element (15) is defined at least a first chamber (16) communicating with said first port (13) and at least a second chamber (17) arranged on the opposite side of said first chamber (16) and communicating with said second port (14), said elastic means (8) operating on said distributor element (15) on the opposite side of said first chamber (16) to counteract the action exerted on the distributor element itself by said first piloting line (6),
and by the fact that said piloting device (18) defines a piloting chamber (21), arranged on the side of said second chamber (17) with respect to said distributor element (15), communicating with said control line (19) and within which said actuator element (20) is at least partly housed.

5. Device (1) according to claim 4, **characterized by** the fact that said actuator element (20) splits said piloting chamber (21) into a thrust chamber (21a) communicating with said control line (19), and into a discharge chamber (21b), communicating with a discharge tank (S).

6. Device (1) according to one or more of the preceding claims, **characterized by** the fact that as the pressure of the working fluid along said control line (19) increases, the force exerted by said actuator element (20) on said valve means (4) counteracting the action of said first piloting line (6) increases.

7. Device (1) according to claim 6, **characterized by** the fact that said discharge chamber (21b) is positioned between said second chamber (17) and said thrust chamber (21a).

8. Device (1) according to claim 6 or 7, **characterized by** the fact that said piloting device (18) comprises elastic piloting means (28) positioned between said actuator element (20) and said distributor element (15) and housed within said discharge chamber (21b) wherein, as a result of the pressure increase along said control line (19), said actuator element (20) progressively compresses said elastic piloting means (28).

9. Device (1) according to one or more of claims 1 to 5, **characterized by** the fact that as the pressure of the working fluid along said control line (19) increases, the force exerted by said actuator element (20) on said valve means (4) counteracting the action of said first piloting line (6) decreases.

10. Device (1) according to claim 9, **characterized by** the fact that said thrust chamber (21a) is positioned between said second chamber (17) and said discharge chamber (21b) and by the fact that said elastic means (8) are housed within said discharge chamber (21b) wherein, as a result of the increase in pressure of the working fluid along said control line (19), said actuator element (20) moves in a way concordant with the action exerted by said first piloting line (6), thus causing the progressive compression of said elastic means (8).

11. Device (1) according to claim 9 or 10, **characterized by** the fact that it comprises safety valve means (22) adapted to set said control line (19) in communication with said second discharge chamber (21b) upon reaching a predefined pressure value along the control line itself.

12. Device (1) according to one or more of the preceding claims, **characterized by** the fact that said control line (19) is communicating with said supply line (2).

13. Device (1) according to one or more of the preceding claims, **characterized by** the fact that the ends (15a, 15b) of said distributor element (15) are communicating with said discharge chamber (21b).

14. Device (1) according to claim 13, **characterized by** the fact that said distributor element (15) has a through hole (24) adapted to set its opposite ends (15a, 15b) in communication with each other.

15. Device (1) according to one or more of claims 1 to 14, **characterized by** the fact that it comprises a plurality of delivery lines (3a, 3b) connectable to relevant user points having predefined priorities and by the fact that said valve means (4) have a plurality of working positions, equal to the number of delivery lines (3a, 3b), wherein upon reaching each working position they set said supply line (2) in communication with a corresponding delivery line (3a, 3b) while keeping open the connection between said supply line (2) and the delivery line (3a, 3b) corresponding to the previous working position, wherein said working positions are arranged in succession to each other so as to progressively set said supply line (2) in communication with the delivery lines (3a, 3b) having gradually decreasing priority as one moves away from the home position, and **characterized by** the fact that said first piloting line (6) is communicating with said supply line (2) and said second piloting line (7) is communicating with the delivery line (3) having greater pressure.
